# EUROPEAN PATENT APPLICATION

(11) **EP 4 382 589 A1**
(43) Date of publication of application: **12.06.2024**
(21) Application number: 22880580.0
(22) Date of filing: 17.06.2022
(51) Int. Cl.: C10M 169/04, C10N 10/04, C10N 10/06, C10N 30/06, C10N 40/24, C10N 50/02, C09D 125/08, C09D 133/00, C10M 107/28, C10M 125/10, C10M 125/24, C10M 143/00, C09D 7/61, C09D 7/65, C23C 26/00

(54) **COATING MATERIAL FOR COATING METAL PLATE**

(30) Priority: 14.10.2021 JP 2021168759; 22.03.2022 JP 2022045023
(71) Applicant: JFE Steel Corporation, Tokyo 100-0011 (JP)
(72) Inventor: FURUYA Shinichi, Tokyo 100-0011 (JP); MATSUDA Takeshi, Tokyo 100-0011 (JP); AOYAMA Tomohiro, Tokyo 100-0011 (JP); KOIBUCHI Shun, Tokyo 100-0011 (JP)
(74) Representative: Hoffmann Eitle
(86) International application number: PCT/JP2022/024356
(87) International publication number: WO 2023/062874

(57) **Abstract**

An object is to provide a coating solution for coating a metal sheet to be subjected to complicated forming for which press forming is difficult, so as to form a film that exhibits low sliding resistance in a portion prone to cracking during press forming and excellent press formability in a portion subjected to a high contact pressure where occurrence of die galling is anticipated.

A coating solution containing an acrylic resin having a glass transition point (Tg) of 100°C or higher and an acid value-to-glass transition point ratio R = acid value (mg-KOH/g)/Tg (°C) of 1.50 or more, and a polyolefin wax having a melting point of 100°C or higher and 145°C or lower and an average particle diameter of 3.0 µm or less is applied to a metal sheet.

## Description

### Technical Field

The present invention relates to a coating solution for coating a metal sheet. Particularly, it relates to a coating solution for coating a metal sheet and for obtaining a lubricating film that has excellent slidability in press forming even in severe drawing.

### Background Art

Metal sheets such as cold-rolled steel sheets, hot-rolled steel sheets, stainless steel sheets, and aluminum sheets are widely used in a broad range of fields centering on automobile body usages, and in these usages, these metal sheets are typically press-formed and used. In recent years, there has been increasing need for parts integration for streamlining the process and improvements in design, and more complicated forming has become necessary.

More complicated press forming may seriously adversely affect the automobile productivity since metal sheets may not withstand forming and may rupture and die galling may occur during continuous press forming.

One way to improve the press formability of metal sheets is to surface-treat the die. Surface-treating the die is a widely implemented method, but according to this method, the die cannot be adjusted after the surface treatment. Another issue is the high cost. Thus, improving the press formability of steel sheets themselves has been highly demanded.

One way to improve the press formability without surface-treating the die is to use a lubricant oil with high viscosity. However, this may cause degreasing failure after press forming, and the coatability may be degraded.

Thus, various types of lubricating surface treatment have been studied as the technology that enables press forming without surface-treating the die or using a lubricant oil with high viscosity.

Patent Literature 1 discloses a technology of forming a lubricating film, which is an acrylic resin film containing a synthetic resin powder, on a galvanized steel sheet.

Patent Literature 2 discloses a metal sheet coated with a lubricating film in which a solid lubricant projects by 0.01 to 1.5 µm from the resin film surface.

Patent Literature 3 discloses a lubricating surface-treated metal product that has excellent press formability and is coated with a 0.5 to 5 µm film containing a polyurethane resin and a lubricant.

Patent Literature 4 discloses a technology of forming an alkali-soluble organic film containing an epoxy resin and a lubricant on a steel sheet.

### Citation List

### Patent Literature

PTL 1: Japanese Unexamined Patent Application Publication No. 9-170059
PTL 2: Japanese Unexamined Patent Application Publication No. 10-52881
PTL 3: Japanese Unexamined Patent Application Publication No. 2000-309747
PTL 4: Japanese Unexamined Patent Application Publication No. 2000-167981

### Summary of Invention

### Technical Problem

However, according to Patent Literatures 1 to 4, although the lubricating property emerges due to a lubricating effect of the lubricant or the like contained therein, the press formability has not been always sufficient in complicated forming.

The present invention has been made under the aforementioned circumstances, and an object thereof is to provide a coating solution for coating a metal sheet to be subjected to complicated forming for which press forming is difficult, so as to form a film that exhibits low sliding resistance in a portion prone to cracking during press forming and excellent press formability in a portion subjected to a high contact pressure where occurrence of die galling is anticipated.

In addition, the antirust property is also necessary when the metal sheet is stored in a coil form. Furthermore, when metal sheets are to be used in automobile bodies, the metal sheets need to have film removability sufficient in an alkaline degreasing step in the coating step and excellent adhesion in the assembly step. In addition, as the coating solution, stability that maintains a state where the contained components are evenly dispersed is needed. Solution to Problem

The inventors of the present invention have carried out extensive research to address the issues described above. As a result, the inventors have found that the aforementioned issues can be addressed by applying, to a metal sheet, a coating solution that contains an acrylic resin having a glass transition point (Tg) of 100°C or higher and an acid value-to-glass transition point ratio R = acid value (mg-KOH/g)/Tg (°C) of 1.50 or more and a polyolefin wax having a melting point of 100°C or higher and 145°C or lower and an average particle diameter of 3.0 pm or less.

The present invention has been completed on the basis of the aforementioned findings, and the gist thereof is as follows.
[1] A coating solution for coating a metal sheet, the coating solution containing: an acrylic resin having a glass transition point (Tg) of 100°C or higher and an acid value-to-glass transition point ratio R = acid value (mg-KOH/g)/Tg (°C) of 1.50 or more; and a polyolefin wax having a melting point of 100°C or higher and 145°C or lower and an average particle diameter of 3.0 pm or less.
[2] The coating solution for coating a metal sheet described in [1], in which the acid value of the acrylic resin is 180 mg-KOH/g or more and 350 mg-KOH/g or less.
[3] The coating solution for coating a metal sheet described in [1] or [2], in which the acid value-to-glass transition point ratio R of the acrylic resin is 2.05 or less.
[4] The coating solution for coating a metal sheet described in any one of [1] to [3], in which a proportion of the acrylic resin in a total solid content is 30% or more and a proportion of the polyolefin wax in the total solid content is 5% or more and 50% or less in terms of a mass fraction when the coating solution is dried.
[5] The coating solution for coating a metal sheet described in any one of [1] to [4], in which the acrylic resin has a mass-average molecular weight of 5000 or more and 30000 or less.
[6] The coating solution for coating a metal sheet described in any one of [1] to [5], in which the acrylic resin is a styrene acrylic resin.
[7] The coating solution for coating a metal sheet described in any one of [1] to [6], further containing 5% or more and 30% or less of an antirust agent in a total solid content in terms of a mass fraction when the coating solution is dried.
[8] The coating solution for coating a metal sheet described in any one of [1] to [7], in which the antirust agent is at least one selected from the group consisting of aluminum salts and zinc salts of phosphoric acids, and zinc oxide.
[9] The coating solution for coating a metal sheet described in any one of [1] to [8], in which the polyolefin wax has an average particle diameter of 0.01 µm or more and 0.5 pm or less.
[10] The coating solution for coating a metal sheet described in any one of [1] to [9], further containing 1% or more and 10% or less of silica in a total solid content in terms of a mass fraction when the coating solution is dried. Advantageous Effects of Invention

According to the present invention, the friction coefficient with the die or the like decreases prominently, and a metal sheet having excellent press formability is obtained. Thus, excellent press formability can be stably imparted to a metal sheet subjected to complicated forming. Furthermore, the stability of the coating solution is secured, and the antirust property of the metal sheet having the film thereon is excellent. Furthermore, since adhesion is also excellent, an adhesive can be used in the same manner as that for typical metal sheets; and, since the film removability by alkaline degreasing is excellent, the coating step is not obstructed.

### Brief Description of Drawings

[Fig. 1] Fig. 1 is a schematic front view of a friction coefficient meter.
[Fig. 2] Fig. 2 is a schematic perspective view illustrating the shape and dimensions of a bead illustrated in Fig. 1.

### Description of Embodiments

Embodiments of the present invention will now be described.

A coating solution for coating a metal sheet according to the present invention is a coating solution that contains an acrylic resin having a glass transition point (Tg) of 100°C or higher and an acid value-to-glass transition point ratio R = acid value (mg-KOH/g)/Tg (°C) of 1.50 or more and a polyolefin wax having a melting point of 100°C or higher and 145°C or lower and an average particle diameter of 3.0 pm or less.

Hereinafter, the acid value-to-glass transition point ratio R = acid value (mg-KOH/g)/Tg (°C) is represented as R = acid value/Tg.

The glass transition point of the acrylic resin in the coating solution for coating a metal sheet according to the present invention is set to 100°C or higher to obtain an excellent lubricating property. At a glass transition point lower than 100°C, the resin softens during sliding, the polyolefin wax holding ability is decreased, the ability to prevent direct contact between a metal sheet and a die is degraded, and thus excellent slidability is not obtained. The glass transition point is preferably 110°C or higher and 150°C or lower. At a glass transition point exceeding 150°C, the resin tends to become brittle due to high hardness during sliding, and an excellent lubricating property is not always obtained.

Here, the glass transition point refers to a midpoint glass transition temperature measured in accordance with JIS K 7121 "Testing Methods for Transition Temperatures of Plastics".

The acid value-to-glass transition point ratio R = acid value/Tg of the acrylic resin is set to 1.50 or more. Even when the glass transition point is 100°C or higher, an excellent lubricating property is not obtained if the acid value is low (R < 1.50). The reason for this is not exactly clear but is presumably that the carboxy groups in the acrylic resin have high affinity with the die and produce an effect of adsorbing the polyolefin wax in the film to the die during sliding. As the acrylic resin component containing the polyolefin wax adsorbs to the die during sliding, the surface of the die becomes protected by the polyolefin wax, the effect of preventing direct contact with the metal sheet is enhanced, and thus the slidability is improved. Accordingly, when the acid value is low (R < 1.50), there are not enough carboxy groups, and thus the slidability is poor. When the glass transition point of the acrylic resin is increased, the resin does not soften as easily by sliding and thus does not easily adsorb to the die. Consequently, in order to obtain excellent slidability even at an increased glass transition point, the acid value also needs to be increased. In other words, the acid value-to-glass transition point ratio R = acid value/Tg needs to be 1.50 or more. R is preferably 1.80 or more. The upper limit of R is not particularly limited but is preferably 2.05 or less. The reason for this is because the antirust property may be degraded at R exceeding 2.05.

The acid value of the acrylic resin is preferably 180 mg-KOH/g or more and 350 mg-KOH/g or less. At an acid value less than 180 mg-KOH/g, the film removability by alkali may be degraded, and the adhesive strength by an adhesive may not be sufficiently obtained. At an acid value exceeding 350 mg-KOH/g, the antirust property may be degraded.

Here, an acid value is the weight in milligrams of potassium hydroxide necessary to neutralize carboxy groups contained in 1 g of a resin, and is measured in accordance with JIS K 0070, "Test methods for acid value, saponification value, ester value, iodine value, hydroxyl value and unsaponifiable matter of chemical products". In the present invention, the unit is indicated as mg-KOH/g.

The wax used in the present invention may be a polyolefin wax having a melting point of 100°C or higher and 145°C or lower and an average particle diameter of 3.0 pm or less.

A polyolefin wax is used as the wax because the polyolefin wax has low surface energy and a self-lubricating property, and thus an excellent lubricating property can be obtained. Moreover, it is relatively easy to adjust the melting point of a polyolefin to 100°C or higher and 145°C or lower by controlling density and molecular weight.

When the melting point of the polyolefin wax is 100°C or higher and 145°C or lower, not only the self-lubricating property of the polyolefin wax itself is exhibited, but also the polyolefin wax becomes in a half-molten state due to sliding during press forming and mixes with an organic resin, and thus the surface of the die can be covered with the resulting lubricating film component. As a result, an excellent lubricating effect is obtained by reducing the direct contact between the die and the steel sheet. When the melting point is lower than 100°C, the polyolefin wax completely melts due to the frictional heat generated by sliding during press forming, and the lubricating effect of the polyolefin wax itself cannot be sufficiently obtained; furthermore, the aforementioned die-coating effect is no longer obtained. When the melting point of the polyolefin wax is higher than 145°C, the polyolefin wax does not melt during sliding, a sufficient lubricating effect is not obtained, and the die-coating effect is no longer obtained. Furthermore, the melting point of the polyolefin wax is preferably 120°C or higher and 140°C or lower.

Here, the melting point of the polyolefin wax is the melting temperature measured in accordance with JIS K 7121 "Testing Methods for Transition Temperatures of Plastics".

When the average particle diameter of the polyolefin wax exceeds 3.0 pm, the polyolefin wax does not easily mix with the organic resin during sliding, the aforementioned die-coating effect is not obtained, and a sufficient lubricating property is not obtained. The average particle diameter of the polyolefin wax is preferably 0.5 µm or less and more preferably 0.3 µm or less.

The average particle diameter of the polyolefin wax is preferably 0.01 pm or more. When the average particle diameter of the polyolefin wax is less than 0.01 pm, the polyolefin wax easily dissolves in a lubricant oil during sliding, and a sufficient improvement effect of lubricating property may not be exhibited; furthermore, aggregation is likely to occur in a coating solution for forming the film, and thus the coating solution stability is low. The average particle diameter of the polyolefin wax is more preferably 0.03 pm or more. Considering the property to mix with the aforementioned acrylic resin, the average particle diameter of the polyolefin wax is preferably 0.01 µm or more and 0.5 pm or less.

The average particle diameter is a median diameter of the volume-average diameters, and is determined by a laser diffraction/scattering method. For example, the average particle diameter can be determined by analyzing a sample diluted with pure water with a laser diffraction/scattering particle size distribution analyzer, Partica (registered trademark) LA-960V2 (produced by HORIBA, Ltd.).

A polyethylene wax is preferably used since the polyethylene wax yields the highest lubricating effect among the polyolefin waxes.

The proportion of the acrylic resin in the total solid content is preferably 30% or more and the proportion of the polyolefin wax in the total solid content is preferably 5% or more and 50% or less in terms of a mass fraction when the coating solution for coating a metal sheet according to the present invention is dried.

When the proportion of the acrylic resin in the total solid content is 30% or more, the properties that are affected by physical properties derived from the acrylic resin, such as the lubricating property-improving effect caused by the adsorption transfer to the die during sliding, film removability, and adhesion, are sufficiently obtained. When the proportion of the acrylic resin in the total solid content is less than 30%, the influence of other components is increased, and the desired performance may not be obtained.

When the mass fraction of the polyolefin wax in the total solid content is less than 5%, a sufficient lubricating effect may not be obtained. When the mass fraction of the polyolefin wax in the total solid content is 10% or more, a particularly excellent lubricating effect is obtained. The mass fraction of the polyolefin wax in the total solid content is preferably 50% or less. When the mass fraction of the polyolefin wax in the total solid content exceeds 50%, the polyolefin wax tends to fall off due to deficiency of the base resin component, the adhesion to the metal sheet is degraded, and the film cannot stably exist and may exhibit degraded adhesion. Furthermore, in an automobile body usage, a sufficient degreasing property may not be obtained in the alkaline degreasing step in the coating step, and the film may not sufficiently be removed in the alkali degreasing step and may remain and degrade the coatability. The mass fraction of the polyolefin wax in the total solid content is more preferably 30% or less.

Here, the mass fraction of the polyolefin wax in the total solid content is the fraction of the mass of the solid component in the polyolefin wax to the mass of all solid components in the coating solution.

The mass-average molecular weight of the acrylic resin is preferably 5000 or more and 30000 or less. When the mass-average molecular weight of the acrylic resin is less than 5000, the antirust property may be degraded, and when more than 30000, the adhesion may be degraded.

Here, the mass-average molecular weight is a mass-average molecular weight measured on the basis of JIS K 7252 "Plastics - Determination of average molecular mass and molecular mass distribution of polymers using size-exclusion chromatography".

Furthermore, the acrylic resin is preferably a styrene acrylic resin. Since styrene is included in the resin monomers, water resistance is improved, and thus the antirust property is improved. Furthermore, an effect of achieving excellent slidability compared to when no styrene is contained is also exhibited.

The coating solution for coating a metal sheet according to the present invention preferably contains 5% or more and 30% or less of an antirust agent in the total solid content in terms of a mass fraction. Rusting does not occur in a normal storage environment even when no antirust agent is contained; however, when the antirust agent content is less than 5%, the antirust property is insufficient in a poor storage environment, and rust may occur when a film is formed on a metal sheet. In particular, when a metal strip in a coiled and lapped state is stored in a poor storage environment, rust may occur due to absorption of moisture.

When the proportion of the antirust agent is more than 30%, adhesion may be degraded, the antirust agent may settle in the coating solution, and the coating solution stability may be degraded. The antirust agent is preferably at least one selected from the group consisting of aluminum salts and zinc salts of phosphoric acids, and zinc oxide. Here, the phosphoric acids include orthophosphoric acid and condensed phosphoric acids such as pyrophosphoric acid, tripolyphosphoric acid, tetrapolyphosphoric acid, and metaphosphoric acid. A sufficient antirust effect can be exhibited by using these antirust agents, and, in addition, the degradation of the coating solution stability is decreased.

The coating solution for coating a metal sheet according to the present invention preferably contains 1% or more and 10% or less of silica in the total solid content in terms of a mass fraction. It becomes possible to reduce settling of the antirust agent by containing silica, and thus the coating solution stability is improved. Moreover, the film exhibits enhanced water repellency and a sufficient antirust property is obtained. This effect is not easily obtained if the silica content is less than 1%, and the adhesion may be degraded at a content exceeding 10%. When silica is to be contained in the coating solution for coating a metal sheet according to the present invention , colloidal silica having a particle diameter of 5 nm or more and 200 nm or less is preferably used.

In the present invention, a surface conditioner, a defoaming agent, a dispersing agent, etc., typically added to coating solutions may be contained as the components other than the acrylic resin, the polyolefin wax, the antirust agent, and silica.

A metal sheet according to the present invention will now be described in detail. In the present invention, any of the coating solutions described above is applied to at least one surface of a metal sheet and dried to provide a lubricated metal sheet having a lubricating film formed thereon. Water or an organic solvent can be used as the solvent of the coating solution, but water is preferably used. The concentration of all solid components in the coating solution is preferably 1% to 30% in terms of a mass fraction.

When the concentration of all solid components in the coating solution is less than 1% or more than 30%, coating unevenness may occur. The coating method is not particularly limited, and examples thereof include methods using roll coaters and bar coaters, and coating methods that involve spraying, immersing, and brushing. The steel sheet after the coating can be dried by a common method. Examples thereof include drying by hot air, drying by an IH heater, and infrared heating. Coating is preferably performed so that the coating weight per surface of the metal sheet on a dry mass basis is 0.3 to 2.5 g/m². When the coating weight of the coating solution of the present invention is less than 0.3 g/m², sufficient slidability may not be obtained, and when the coating weight is more than 2.5 g/m², the film removability by alkali and the adhesion may be degraded. The highest temperature that the steel sheet reaches during drying is preferably 60°C or higher but not higher than the melting point of the polyolefin wax used. When the highest temperature that the steel sheet reaches is lower than 60°C, drying takes longer, and the antirust property may be degraded. When the highest temperature that the steel sheet reaches is higher than the melting point of the polyolefin wax, the polyolefin wax melts and unites, the particle diameter increases, and thus the lubricating property may be degraded.

The metal sheet may be any metal sheet. Examples of the metal sheets that can be used include hot-rolled steel sheets, cold-rolled steel sheets, stainless steel sheets, galvanized steel sheets, aluminum sheets, and titanium sheets.

### EXAMPLES

The present invention will now be described through examples. The present invention is not limited to the examples described below.

A cold-rolled steel sheet SPCD (JIS G 3141) having a sheet thickness of 0.7 mm and 270 MPa-class tensile strength was used. A coating solution having a composition indicated in Table 1 was prepared by using pure water so that the solid component concentration was 15 mass%, applied to the cold-rolled steel sheet with a bar coater, and dried with an IH heater so that the highest temperature that the steel sheet reached was 80°C so as to obtain a lubricated steel sheet. The amount of coating was adjusted so that the film coating weight per surface was 1.0 g/m². Colloidal silica having a volume-average particle diameter of 9 nm was used as the silica.

The film coating weight was determined by removing the film from the steel sheet after the film coating, and dividing the difference in mass of the steel sheet before and after the film removal by the area.

### (1) Press formability (sliding property) evaluation method

To evaluate the press formability, the friction coefficients of the test materials were measured as follows.

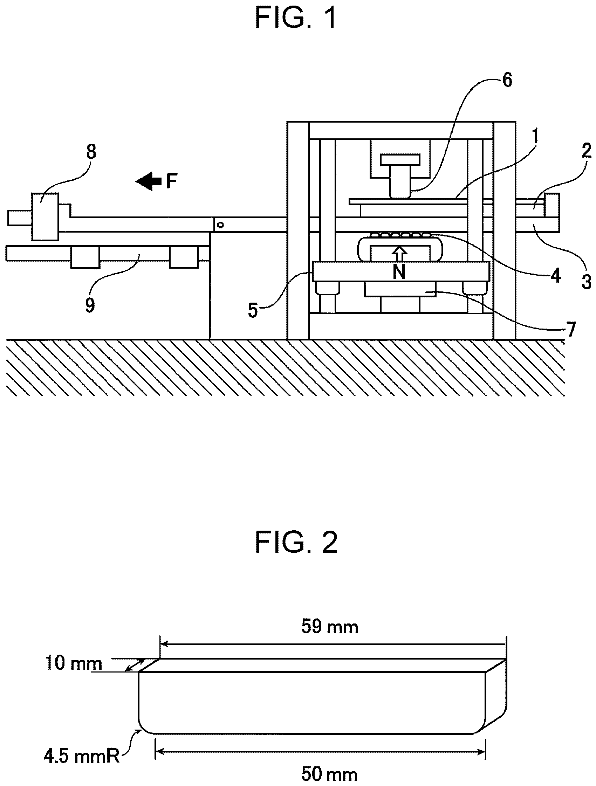

Fig. 1 is a schematic front view of a friction coefficient meter. As illustrated in this drawing, a friction coefficient measurement sample 1 taken from a test material was fixed onto a sample stage 2, and the sample stage 2 was fixed to an upper surface of a horizontally movable slide table 3. A slide table support stage 5 capable of moving upward and downward and having rollers 4 in contact with a lower surface of the slide table 3 was disposed under the slide table 3, and a first load cell 7 for measuring a pressing load N applied to the friction coefficient measurement sample 1 from a bead 6 as the slide table support table 5 was pushed upward was installed onto the slide table support stage 5. A second load cell 8 for measuring a sliding resistance force F for moving the slide table 3 in a horizontal direction while the pressing force was acting was installed onto an end portion of the slide table 3. A cleaning oil for pressing, PRETON (registered trademark) R352L, produced by SUGIMURA Chemical Industrial Co., Ltd., serving as a lubricant oil was applied to a surface of the sample 1, and then the test was conducted.

Fig. 2 is a schematic perspective view illustrating the shape and dimensions of the bead used. Sliding occurs as the lower surface of the bead 6 is pressed against the surface of the sample 1. The shape of the bead 6 illustrated in Fig. 2 has a width of 10 mm and a length of 59 mm in the sample sliding direction, and lower portions at two ends in the sliding direction are each constituted by a curved surface having a curvature of 4.5 mmR. The bead lower surface against which the sample is pressed has a flat surface having a width of 10 mm and a length of 50 mm in the sliding direction.

The friction coefficient measurement test was carried out by using the bead illustrated in Fig. 2 at a pressing load N: 400 kgf and a sample withdrawing rate (speed of the slide table 3 moving in the horizontal direction): 20 cm/min. The friction coefficient µ between the test material and the bead was calculated from the formula µ = F/N.

The sliding property was evaluated as follows: a friction coefficient of 0.119 or less was considered particularly excellent slidability and evaluated as Ⓞ; a friction coefficient of more than 0.119 and 0.130 or less was considered excellent slidability and evaluated as o; and a friction coefficient exceeding 0.130 was considered insufficient and evaluated as ×.

### (2) Film removability evaluation method

On the assumption that the metal sheet of the present invention is used in automobile usages, the film removability during degreasing was evaluated. In order to determine the removability of the film, each of the test specimens was degreased with an alkaline degreaser, Fine Cleaner (registered trademark) E6403 (produced by Nihon Parkerizing Co., Ltd.). The degreasing involved immersing the test specimen in a degreasing liquid having a degreaser concentration of 20 g/L at a temperature of 40°C for a particular length of time and then washing the test specimen with tap water. The surface carbon intensity of the degreased test specimen was measured with an X-ray fluorescence analyzer, and the film removing rate was calculated from the equation below by using the measured value, the preliminarily measured surface carbon intensity before degreasing, and the surface carbon intensity of an untreated metal sheet. Film removing rate (%) = [(carbon intensity before degreasing - carbon intensity after degreasing)/(carbon intensity before degreasing - carbon intensity of untreated steel sheet)] × 100

The film removability was evaluated according to the following standard on the basis of the time of immersion in an alkaline degreasing liquid for which the film removing rate was 98% or more. The case where the time was 120 second or shorter was considered excellent film removability and evaluated as o, and the case where the time was longer than 120 seconds was considered insufficient film removability and evaluated as Δ.

### (3) Antirust property evaluation method

On the assumption that the metal sheet of the present invention is to be stored as a coiled metal strip, the antirust property in a lapped state was evaluated. Each of the test specimens was processed into 150 mm × 70 mm size, an antirust oil was applied to both surfaces in an amount of 1.0 g/m² per surface, two test specimens were placed on top of each other, and the test was carried out at a temperature of 50°C and a humidity of 95% RH while a load was applied so that the contact pressure was 0.02 kgf/mm². The antirust property was evaluated every seven days by checking the inner surfaces that were placed on top of each other and counting the days taken for the rust to occur. The case where the number of days was 56 days or more was considered a particularly excellent antirust property and evaluated as Ⓞ, the case where the number of days was 21 or more was considered an excellent antirust property and evaluated as o, and the case where the number of days was less than 21 was considered an insufficient antirust property and evaluated as Δ.

### (4) Adhesion evaluation method

Each of the test specimens was processed into 100 × 25.4 mm size, immersed in an antirust oil, and then allowed to stand perpendicularly for 24 hours to remove excess oil. By using two such test specimens, an epoxy adhesive was evenly applied to a thickness of 0.2 mm in a 25.4 mm × 13 mm portion, and the two test specimens were placed on top of each other, held together with a clip, and baked at 180°C for 20 minutes to dry and cure. After cooling, a shear tensile test was performed with an autograph tester to measure the shear adhesive strength. Two metal sheets (bare sheets) having no lubricating films were used to perform a shear tensile test in the same manner, and the shear adhesive strength was 29.0 MPa. The case where the adhesive strength was 20 MPa or more was considered excellent adhesion and evaluated as o, and the case where the adhesive strength was less than 20 MPa was considered insufficient adhesion and evaluated as Δ.

### (5) Coating solution stability evaluation method

Into a φ18 mm × 180 mm test tube, 25 g of each of the coating solutions adjusted with pure water so that the solid matter concentration was 15 mass% was placed, thoroughly shaken, and allowed to stand still to evaluate the time taken for deposits to occur at the bottom of the test tube. The case where deposits did not occur even after 24 hours was considered excellent coating stability and evaluated as o, and the case where deposits occurred within 24 hours was considered insufficient and evaluated as Δ.

**[Table 1]**

| No. | Acrylic resin | | | | | | Wax | | | | Antirust agent | | Silica | Remarks |
|---|---|---|---|---|---|---|---|---|---|---|---|---|---|---|
| | Type | Tg (°C) | Acid value (mg-KOH/g) | R (= acid value/Tg) | Molecular weight | Mass fraction (%) | Type | Melting point (°C) | Average particle diameter (µm) | Mass fraction (%) | Type | Mass fraction (%) | Mass fraction (%) | |
| 1 | Styrene acrylic | 80 | 185 | 2.31 | 10000 | 80 | Polyethylene | 130 | 0.15 | 20 | - | 0 | 0 | Comparative Example |
| 2 | Styrene acrylic | 100 | 200 | 2.00 | 10000 | 80 | Polyethylene | 130 | 0.15 | 20 | - | 0 | 0 | Example |
| 3 | Styrene acrylic | 120 | 240 | 2.00 | 10000 | 80 | Polyethylene | 130 | 0.15 | 20 | - | 0 | 0 | Example |
| 4 | Styrene acrylic | 130 | 350 | 2.69 | 10000 | 80 | Polyethylene | 130 | 0.15 | 20 | - | 0 | 0 | Example |
| 5 | Styrene acrylic | 130 | 400 | 3.08 | 10000 | 80 | Polyethylene | 130 | 0.15 | 20 | - | 0 | 0 | Example |
| 6 | Styrene acrylic | 101 | 160 | 1.58 | 10000 | 80 | Polyethylene | 130 | 0.15 | 20 | - | 0 | 0 | Example |
| 7 | Styrene acrylic | 120 | 180 | 1.50 | 10000 | 80 | Polyethylene | 130 | 0.15 | 20 | - | 0 | 0 | Example |
| 8 | Styrene acrylic | 130 | 220 | 1.69 | 4000 | 80 | Polyethylene | 130 | 0.15 | 20 | - | 0 | 0 | Example |
| 9 | Styrene acrylic | 128 | 260 | 203 | 5000 | 80 | Polyethylene | 130 | 0.15 | 20 | - | 0 | 0 | Example |
| 10 | Styrene acrylic | 110 | 200 | 1.82 | 30000 | 80 | Polyethylene | 130 | 0.15 | 20 | - | 0 | 0 | Example |
| 11 | Styrene acrylic | 110 | 200 | 1.82 | 50000 | 80 | Polyethylene | 130 | 0.15 | 20 | - | 0 | 0 | Example |
| 12 | Styrene acrylic | 140 | 180 | 129 | 10000 | 80 | Polyethylene | 130 | 0.15 | 20 | - | 0 | 0 | Comparative Example |
| 13 | Styrene acrylic | 110 | 115 | 1.05 | 10000 | 80 | Polyethylene | 130 | 0.15 | 20 | - | 0 | 0 | Comparative Example |
| 14 | Styrene acrylic | 120 | 240 | 2.00 | 10000 | 80 | Polyethylene | 90 | 0.2 | 20 | - | 0 | 0 | Comparative Example |
| 15 | Styrene acrylic | 120 | 240 | 2.00 | 10000 | 80 | Polyethylene | 100 | 0.3 | 20 | - | 0 | 0 | Example |
| 16 | Styrene acrylic | 120 | 240 | 2.00 | 10000 | 80 | Polyethylene | 120 | 0.06 | 20 | - | 0 | 0 | Example |
| 17 | Styrene acrylic | 120 | 240 | 2.00 | 10000 | 80 | Polypropylene | 145 | 0.03 | 20 | - | 0 | 0 | Example |
| 18 | Styrene acrylic | 120 | 240 | 2.00 | 10000 | 80 | Polypropylene | 155 | 0.06 | 20 | - | 0 | 0 | Comparative Example |
| 19 | Styrene acrylic | 120 | 240 | 2.00 | 10000 | 80 | Polyethylene | 132 | 0.5 | 20 | - | 0 | 0 | Example |
| 20 | Styrene acrylic | 120 | 240 | 2.00 | 10000 | 80 | Polyethylene | 132 | 3 | 20 | - | 0 | 0 | Example |
| 21 | Styrene acrylic | 120 | 240 | 2.00 | 10000 | 80 | Polyethylene | 132 | 6 | 20 | - | 0 | 0 | Comparative Example |
| 22 | Styrene acrylic | 120 | 240 | 2.00 | 10000 | 100 | - | - | - | 0 | - | 0 | 0 | Comparative Example |
| 23 | Styrene acrylic | 120 | 240 | 2.00 | 10000 | 95 | Polyethylene | 120 | 0.06 | 5 | - | 0 | 0 | Example |
| 24 | Styrene acrylic | 120 | 240 | 2.00 | 10000 | 90 | Polyethylene | 120 | 0.06 | 10 | - | 0 | 0 | Example |
| 25 | Styrene acrylic | 120 | 240 | 2.00 | 10000 | 50 | Polyethylene | 120 | 0.06 | 50 | - | 0 | 0 | Example |
| 26 | Styrene acrylic | 120 | 240 | 2.00 | 10000 | 40 | Polyethylene | 120 | 0.06 | 60 | - | 0 | 0 | Example |
| 27 | Acrylic | 110 | 190 | 1.73 | 10000 | 80 | Polyethylene | 130 | 0.15 | 20 | - | 0 | 0 | Example |
| 28 | Styrene acrylic | 120 | 240 | 2.00 | 10000 | 75 | Polyethylene | 130 | 0.15 | 20 | Aluminum tripolyphosphate | 5 | 0 | Example |
| 29 | Styrene acrylic | 120 | 240 | 2.00 | 10000 | 65 | Polyethylene | 130 | 0.15 | 20 | Aluminum tripolyphosphate | 15 | 0 | Example |
| 30 | Styrene acrylic | 120 | 240 | 2.00 | 10000 | 50 | Polyethylene | 130 | 0.15 | 20 | Aluminum tripolyphosphate | 30 | 0 | Example |
| 31 | Styrene acrylic | 120 | 240 | 2.00 | 10000 | 40 | Polyethylene | 130 | 0.15 | 20 | Aluminum tripolyphosphate | 40 | 0 | Example |
| 32 | Styrene acrylic | 120 | 240 | 2.00 | 10000 | 65 | Polyethylene | 130 | 0.15 | 20 | Zinc phosphate | 15 | 0 | Example |
| 33 | Styrene acrylic | 120 | 240 | 2.00 | 10000 | 65 | Polyethylene | 130 | 0.15 | 20 | Zinc oxide | 15 | 0 | Example |
| 34 | Styrene acrylic | 120 | 240 | 2.00 | 10000 | 64 | Polyethylene | 130 | 0.15 | 20 | Aluminum tripolyphosphate | 15 | 1 | Example |
| 35 | Styrene acrylic | 120 | 240 | 2.00 | 10000 | 60 | Polyethylene | 130 | 0.15 | 20 | Aluminum tripolyphosphate | 15 | 5 | Example |
| 36 | Styrene acrylic | 120 | 240 | 2.00 | 10000 | 55 | Polyethylene | 130 | 0.15 | 20 | Aluminum tripolyphosphate | 15 | 10 | Example |
| 37 | Styrene acrylic | 120 | 240 | 2.00 | 10000 | 50 | Polyethylene | 130 | 0.15 | 20 | Aluminum tripolyphosphate | 15 | 15 | Example |

**[Table 2]**

| No. | Slidability | | Film removability | | Antirust property | | Adhesion | | Coating solution stability | | Remarks |
|---|---|---|---|---|---|---|---|---|---|---|---|
| | Friction coefficient | Evaluation | Film removal time (sec) | Evaluation | Days until rusting | Evaluation | Strength (MPa) | Evaluation | Deposition time (min) | Evaluation | |
| 1 | 0.132 | × | 90 | o | 21 | o | 5.0 | Δ | No deposits | o | Comparative Example |
| 2 | 0.112 | ⊚ | 30 | o | 28 | o | 21.3 | o | No deposits | o | Example |
| 3 | 0.103 | ⊚ | 30 | o | 28 | o | 27.5 | o | No deposits | o | Example |
| 4 | 0.099 | ⊚ | 10 | o | 21 | o | 28.5 | o | No deposits | o | Example |
| 5 | 0.095 | ⊚ | 10 | o | 7 | Δ | 28.3 | o | No deposits | o | Example |
| 6 | 0.128 | ○ | 180 | Δ | 28 | o | 17.4 | Δ | No deposits | o | Example |
| 7 | 0.129 | ○ | 120 | o | 28 | o | 28.6 | o | No deposits | o | Example |
| 8 | 0.124 | ○ | 30 | o | 14 | Δ | 28.5 | o | No deposits | o | Example |
| 9 | 0.104 | ⊚ | 30 | o | 28 | o | 29.2 | o | No deposits | o | Example |
| 10 | 0.114 | ⊚ | 30 | o | 28 | o | 20.7 | o | No deposits | o | Example |
| 11 | 0.113 | ⊚ | 30 | o | 28 | o | 17.5 | Δ | No deposits | o | Example |
| 12 | 0.134 | × | 120 | o | 28 | o | 27.9 | o | No deposits | o | Comparative Example |
| 13 | 0.138 | × | 180 | Δ | 28 | o | 21.9 | o | No deposits | o | Comparative Example |
| 14 | 0.148 | × | 30 | o | 28 | o | 26.3 | o | No deposits | o | Comparative Example |
| 15 | 0.128 | o | 30 | o | 28 | o | 27.4 | o | No deposits | o | Example |
| 16 | 0.116 | ⊚ | 30 | o | 28 | o | 28.2 | o | No deposits | o | Example |
| 17 | 0.129 | o | 30 | o | 28 | o | 28.7 | o | No deposits | o | Example |
| 18 | 0.165 | × | 30 | o | 28 | o | 28.8 | o | No deposits | o | Comparative Example |
| 19 | 0.117 | ⊚ | 30 | o | 28 | o | 27.6 | o | No deposits | o | Example |
| 20 | 0.128 | o | 30 | o | 28 | o | 23.5 | o | No deposits | o | Example |
| 21 | 0.147 | × | 30 | o | 28 | o | 21.2 | o | No deposits | o | Comparative Example |
| 22 | 0.195 | × | 30 | o | 28 | o | 29.0 | o | No deposits | o | Comparative Example |
| 23 | 0.129 | ○ | 30 | o | 28 | o | 28.7 | o | No deposits | o | Example |
| 24 | 0.119 | ⊚ | 30 | o | 28 | o | 28.8 | o | No deposits | o | Example |
| 25 | 0.101 | ⊚ | 120 | o | 28 | o | 22.6 | o | No deposits | o | Example |
| 26 | 0.103 | ⊚ | 180 | Δ | 28 | o | 11.2 | Δ | No deposits | o | Example |
| 27 | 0.127 | ○ | 30 | o | 7 | Δ | 29.0 | o | No deposits | o | Example |
| 28 | 0.112 | ⊚ | 30 | o | 35 | o | 28.5 | o | 360 min | Δ | Example |
| 29 | 0.115 | ⊚ | 30 | o | 56 or more | ⊚ | 28.4 | o | 120 min | Δ | Example |
| 30 | 0.114 | ⊚ | 30 | o | 56 or more | ⊚ | 24.5 | o | 60 min | Δ | Example |
| 31 | 0.118 | o | 30 | o | 56 or more | ⊚ | 16.3 | Δ | 30 min | Δ | Example |
| 32 | 0.109 | ⊚ | 30 | o | 56 or more | ⊚ | 28.9 | o | 120 min | Δ | Example |
| 33 | 0.106 | ⊚ | 30 | o | 56 or more | ⊚ | 29.0 | o | 120 min | Δ | Example |
| 34 | 0.107 | ⊚ | 30 | o | 56 or more | ⊚ | 28.6 | o | 360 min | Δ | Example |
| 35 | 0.105 | ⊚ | 30 | o | 56 or more | ⊚ | 25.6 | o | No deposits | o | Example |
| 36 | 0.109 | ⊚ | 60 | o | 56 or more | ⊚ | 21.5 | o | No deposits | o | Example |
| 37 | 0.110 | ⊚ | 90 | o | 56 or more | ⊚ | 10.3 | Δ | No deposits | o | Example |

According to Table 2, the metal sheets to which the coating solution for coating a metal sheet according to the examples of the present invention was applied all exhibited excellent press formability. In contrast, the metal sheets of Comparative Examples that lacked the technical features of the present invention all exhibited inferior press formability.

### Industrial Applicability

A coating solution for coating a metal sheet according to the present invention offers excellent slidability during press forming, film removability by alkali, antirust property, adhesion, and coating solution stability. A lubricated metal sheet on which a film is formed by applying this coating solution has these excellent properties and thus is applicable in a wide range of fields centering on automobile body usages.

### Reference Signs List

- 1: friction coefficient measurement sample
- 2: sample stage
- 3: slide table
- 4: roller
- 5: slide table support stage
- 6: bead
- 7: first load cell
- 8: second load cell
- 9: rail

## Claims

1. A coating solution for coating a metal sheet, the coating solution comprising: an acrylic resin having a glass transition point (Tg) of 100°C or higher and an acid value-to-glass transition point ratio R = acid value (mg-KOH/g)/Tg (°C) of 1.50 or more; and a polyolefin wax having a melting point of 100°C or higher and 145°C or lower and an average particle diameter of 3.0 pm or less.

2. The coating solution for coating a metal sheet according to Claim 1, wherein the acid value of the acrylic resin is 180 mg-KOH/g or more and 350 mg-KOH/g or less.

3. The coating solution for coating a metal sheet according to Claim 1 or 2, wherein the acid value-to-glass transition point ratio R of the acrylic resin is 2.05 or less.

4. The coating solution for coating a metal sheet according to any one of Claims 1 to 3, wherein a proportion of the acrylic resin in the total solid content is 30% or more and a proportion of the polyolefin wax in the total solid content is 5% or more and 50% or less in terms of a mass fraction when the coating solution is dried.

5. The coating solution for coating a metal sheet according to any one of Claims 1 to 4, wherein the acrylic resin has a mass-average molecular weight of 5000 or more and 30000 or less.

6. The coating solution for coating a metal sheet according to any one of Claims 1 to 5, wherein the acrylic resin is a styrene acrylic resin.

7. The coating solution for coating a metal sheet according to any one of Claims 1 to 6, further comprising 5% or more and 30% or less of an antirust agent in the total solid content in terms of a mass fraction when the coating solution is dried.

8. The coating solution for coating a metal sheet according to any one of Claims 1 to 7, wherein the antirust agent is at least one selected from the group consisting of aluminum salts and zinc salts of phosphoric acids, and zinc oxide.

9. The coating solution for coating a metal sheet according to any one of Claims 1 to 8, wherein the polyolefin wax has an average particle diameter of 0.01 µm or more and 0.5 pm or less.

10. The coating solution for coating a metal sheet according to any one of Claims 1 to 9, further comprising 1% or more and 10% or less of silica in the total solid content in terms of a mass fraction when the coating solution is dried.
